# EUROPEAN PATENT APPLICATION

(11) **EP 3 026 661 A2**
(43) Date of publication of application: **01.06.2016**
(21) Application number: 15196578.7
(22) Date of filing: 26.11.2015
(51) Int. Cl.: G09G 3/20, G09G 5/00

(54) **METHOD OF CONTROLLING A REFRESH FREQUENCY OF A DISPLAY SCREEN AND AN ELECTRONIC DEVICE AND COMPUTER PROGRAM FOR PERFORMING SAME**

(30) Priority: 28.11.2014 KR 20140169032
(71) Applicant: Samsung Electronics Co., Ltd., Gyeonggi-do 16677 (KR)
(72) Inventor: SHIN, Hyunchang, 16677 Gyeonggi-do (KR)
(74) Representative: Jenkins, Richard Gavin

(57) **Abstract**

An electronic device for displaying a screen is provided. The electronic device may include a storage unit configured to store an image, a display unit configured to display the image and to perform a refresh, and a controller configured to control the display unit to refresh the image with a preset basic frequency, wherein the display unit includes: a display panel, and a display driving controller configured to analyze the image and, when a frequency change is required based on a result of the analysis, to control the display panel to refresh the image with a changed frequency corresponding to the image.

## Description

### TECHNICAL FIELD

The present disclosure relates to a method, apparatus and computer program for controlling the refresh frequency of a display screen.

### BACKGROUND

Semiconductor materials used for a thin film transistor (TFT) of a display device may include oxide, amorphous silicon (a-si), and low temperature polycrystalline silicon (LTPS). Among them, the oxide (amorphous semiconductor consisting of indium, gallium, zinc, and oxygen (IGZO)) has relatively higher electron mobility than the amorphous silicon, so that the oxide enables low power driving of a display panel and has low manufacturing costs compared to the LTPS. Accordingly, interest in oxide semiconductor-based TFT has increased lately.

Further, the oxide semiconductor-based TFT has a characteristic of a small leakage current. When displaying an image, the display device should perform a refresh (e.g., an operation of immediately performing re-projection before a projected image disappears, so as to prevent a flicker phenomenon of the image) regularly in consideration of the current leakage. However, since the oxide semiconductor has a smaller leakage current compared to other materials, the refresh frequency in the display device may be reduced.

The above information is presented as background information only to assist with an understanding of the present disclosure. No determination has been made, and no assertion is made, as to whether any of the above might be applicable as prior art with regard to the present disclosure.

### SUMMARY

When displaying an image, a display device performs a regular refresh due to the current leakage. Meanwhile, the display device using the oxide semiconductor-based thin film transistor (TFT) may reduce the refresh frequency according to oxide semiconductor characteristics. However, there are currently a few cases where the refresh frequency is reduced according to the oxide semiconductor characteristics and, accordingly, merits of the oxide semiconductor-based TFT cannot be revealed.

Aspects of the present disclosure are to address at least the above-mentioned problems and/or disadvantages and to provide at least the advantages described below. Various embodiments of the present disclosure may analyze a type of an image to be displayed and allocate a changed frequency, which is lower than a basic frequency, to each image according to a result of the analysis. Accordingly, each image may be refreshed with a lowest frequency which does not generate a problem due to a flicker phenomenon. Further, an embodiment of the present disclosure may increase an advantage of the oxide semiconductor-based TFT and reduce power waste.

Various respective aspects and features of the invention are defined in the appended claims. Combinations of features from the dependent claims may be combined with features of the independent claims as appropriate and not merely as explicitly set out in the claims.

It is an aim of certain embodiments of the invention to solve, mitigate or obviate, at least partly, at least one of the problems and/or disadvantages associated with the prior art. Certain embodiments aim to provide at least one of the advantages described below.

In accordance with an aspect of the present disclosure, an electronic device is provided. The electronic device includes a storage unit for storing an image, a display unit configured to display the image and to perform a refresh, and a controller configured to control the display unit to refresh the image with a preset basic frequency, wherein the display unit includes a display panel, and a display driving controller configured to analyze the image, and when a frequency change is required based on a result of the analysis, to control the display panel to refresh the image with a changed frequency corresponding to the image.

In accordance with another aspect of the present disclosure, an electronic device is provided. The electronic device includes a storage unit configured to store an image, a display unit configured to display the image and to perform a refresh, and a controller configured to control the display unit to refresh the image with a preset basic frequency, wherein the controller is configured to analyze the image, and when a frequency change is required based on a result of the analysis, to transmit a command for refreshing the image with a changed frequency corresponding to the image to the display unit, and wherein the display unit includes a display panel, and a display driving controller configured to control the display panel to refresh the image with the changed frequency in response to the command.

In accordance with another aspect of the present disclosure, a method of displaying a screen by a display unit in an electronic device including the display unit and a controller configured to control the display unit is provided. The method includes receiving an image from the controller; refreshing the image with a preset basic frequency, analyzing the image according to a preset reference; and when a frequency change is required based on a result of the analysis, refreshing the image with a changed frequency corresponding to the image.

In accordance with another aspect of the present, a method of displaying a screen by a display unit in an electronic device including the display unit and a controller configured to control the display unit is provided. The method includes receiving an image from the controller, refreshing the image with a preset basic frequency, receiving a request for changing a frequency from the basic frequency to a changed frequency from the controller, and refreshing the image with the changed frequency in response to the request.

It is possible to reduce unnecessary waste of current used for the refresh by reducing the refresh frequency of the display device based on oxide semiconductor-based TFT characteristics. Accordingly, various embodiments of the present disclosure can maximize driving efficiency of the display device.

Embodiments relate to a method of displaying a low frequency screen by using an oxide semiconductor-based thin film transistor (TFT) and an electronic device for performing the same.

Another aspect of the invention provides a computer program comprising instructions arranged, when executed, to implement a method in accordance with any one of the above-described aspects. A further aspect provides machine-readable storage storing such a program.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

Embodiments of the invention will now be described, by way of example only, with reference to the accompanying drawings in which:
FIG. 1 illustrates an electronic device within a network environment according to various embodiments of the present disclosure;
FIG. 2 is a block diagram of an electronic device according to various embodiments of the present disclosure;
FIGS. 3A, 3B, 3C, and 3D illustrate an operation for displaying a screen based on low frequency driving according to a first embodiment of the present disclosure;
FIGS. 4A, 4B, and 4C illustrate an operation for displaying a screen based on low frequency driving according to a second embodiment of the present disclosure;
FIGS. 5A, 5B, 5C and 5D illustrate an operation for displaying a screen based on low frequency driving according to a third embodiment of the present disclosure;
FIGS. 6A, 6B, and 6C illustrate an operation for displaying a screen based on low frequency driving according to a fourth embodiment of the present disclosure; and
FIG. 7 is a block diagram of an electronic device according to various embodiments of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural references unless the context clearly dictates otherwise. Thus, for example, reference to "a component surface" includes reference to one or more of such surfaces.

The expressions such as "include" and "may include" which may be used in the present disclosure denote the presence of the disclosed functions, operations, and constituent elements and do not limit one or more additional functions, operations, and constituent elements. In the present disclosure, the terms such as "include" and/or "have" may be construed to denote a certain characteristic, number, operation, constituent element, component or a combination thereof, but may not be construed to exclude the existence of or a possibility of addition of one or more other characteristics, numbers, operations, constituent elements, components or combinations thereof.

Furthermore, in the present disclosure, the expression "and/or" includes any and all combinations of the associated listed words. For example, the expression "A and/or B" may include A, may include B, or may include both A and B.

In the present disclosure, expressions including ordinal numbers, such as "first" and "second," etc., may modify various elements. However, such elements are not limited by the above expressions. For example, the above expressions do not limit the sequence and/or importance of the elements. The above expressions are used merely for the purpose to distinguish an element from the other elements. For example, a first user device and a second user device indicate different user devices although both of them are user devices. For example, a first element could be termed a second element, and similarly, a second element could be also termed a first element without departing from the scope of the present disclosure.

In the case where a component is referred to as being "connected" or "accessed" to other component, it should be understood that not only the component is directly connected or accessed to the other component, but also there may exist another component between them. Meanwhile, in the case where a component is referred to as being "directly connected" or "directly accessed" to other component, it should be understood that there is no component therebetween. The terms used in the present disclosure are only used to describe specific various embodiments of the present disclosure, and are not intended to limit the present disclosure. As used herein, the singular forms are intended to include the plural forms as well, unless the context clearly indicates otherwise. Singular forms are intended to include plural forms unless the context clearly indicates otherwise.

An electronic device according to the present disclosure may be a device including a communication function. For example, the device corresponds to a combination of at least one of a smartphone, a tablet personal computer (PC), a mobile phone, a video phone , an e-book reader, a desktop PC, a laptop PC, a netbook computer, a personal digital assistant (PDA), a portable multimedia player (PMP), a digital audio player, a mobile medical device, an electronic bracelet, an electronic necklace, an electronic accessory, a camera, a wearable device, an electronic clock, a wrist watch, home appliances (for example, an air-conditioner, vacuum, an oven, a microwave, a washing machine, an air cleaner, and the like), an artificial intelligence robot, a Television (TV), a digital versatile disc (DVD) player, an audio device, various medical devices (for example, magnetic resonance angiography (MRA), MR imaging (MRI), computed tomography (CT), a scanning machine, a ultrasonic wave device, or the like), a navigation device, a global positioning system (GPS) receiver, an event data recorder (EDR), a flight DR (FDR), a set-top box, a TV box (for example, Samsung HomeSync™, Apple TV™, or Google TV™), an electronic dictionary, vehicle infotainment device, an electronic equipment for a ship (for example, navigation equipment for a ship, gyrocompass, or the like), avionics, a security device, electronic clothes, an electronic key, a camcorder, game consoles, a head-mounted display (HMD), a flat panel display device, an electronic frame, an electronic album, furniture or a portion of a building/structure that includes a communication function, an electronic board, an electronic signature receiving device, a projector, and the like. It is obvious to those skilled in the art that the electronic device according to the present disclosure is not limited to the aforementioned devices.

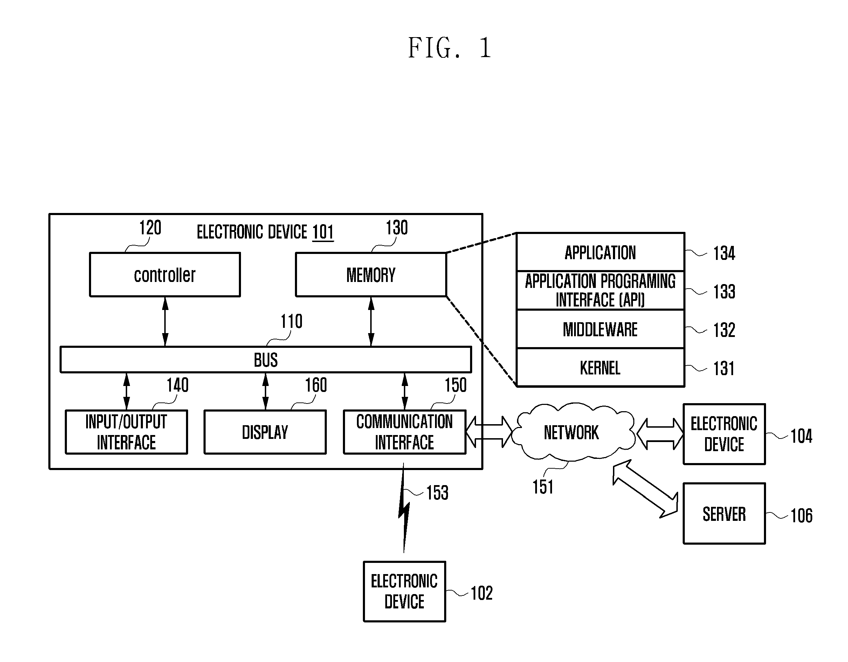

FIG. 1 is a block diagram illustrating a configuration of an electronic device according to an embodiment of the present disclosure.

Referring to FIG. 1, the electronic device 101 may include a bus 110, a controller 120, a memory 130, an input/output interface 140, a display 160, a communication interface 150, and other similar and/or suitable components.

The bus 110 may be a circuit which interconnects the above-described elements and delivers a communication (e.g., a control message) between the above-described elements.

The controller 120 may receive commands from the above-described other elements (e.g., the memory 130, the input/output interface 140, the display 160, the communication interface 150, etc.) through the bus 110, may interpret the received commands, and may execute calculation or data processing according to the interpreted commands.

The memory 130 may store commands or data received from the controller 120 or other elements (e.g., the input/output interface 140, the display 160, the communication interface 150, etc.) or generated by the controller 120 or the other elements. The memory 130 may include programming modules, such as a kernel 131, middleware 132, an application programming interface (API) 133, an application 134, and the like. Each of the above-described programming modules may be implemented in software, firmware, hardware, or a combination of two or more thereof.

The kernel 131 may control or manage system resources (e.g., the bus 110, the controller 120, the memory 130, etc.) used to execute operations or functions implemented by other programming modules (e.g., the middleware 132, the API 133, and the application 134). Also, the kernel 131 may provide an interface capable of accessing and controlling or managing the individual elements of the electronic device 101 by using the middleware 132, the API 133, or the application 134.

The middleware 132 may serve to go between the API 133 or the application 134 and the kernel 131 in such a manner that the API 133 or the application 134 communicates with the kernel 131 and exchanges data therewith. Also, in relation to work requests received from one or more applications 134 and/or the middleware 132, for example, may perform load balancing of the work requests by using a method of assigning a priority, in which system resources (e.g., the bus 110, the controller 120, the memory 130, etc.) of the electronic device 101 can be used, to at least one of the one or more applications 134.

The API 133 is an interface through which the application 134 is capable of controlling a function provided by the kernel 131 or the middleware 132, and may include, for example, at least one interface or function for file control, window control, image processing, character control, or the like.

The input/output interface 140, for example, may receive a command or data as input from a user, and may deliver the received command or data to the controller 120 or the memory 130 through the bus 110. The display 160 may display a video, an image, data, or the like to the user.

The communication interface 150 may connect communication between another electronic device 102 and the electronic device 101 via a network 151 or a wireless communication 153. The communication interface 150 may support a predetermined short-range communication protocol (e.g., Wi-Fi, Bluetooth (BT), and near field communication (NFC)), or predetermined network communication (e.g., the Internet, a local area network (LAN), a wide area network (WAN), a telecommunication network, a cellular network, a satellite network, a plain old telephone service (POTS), or the like). Each of the electronic devices 102 and 104 may be a device which is identical (e.g., of an identical type) to or different (e.g., of a different type) from the electronic device 101. Further, the communication interface 150 may connect communication between a server 106 and the electronic device 101 via the network 151.

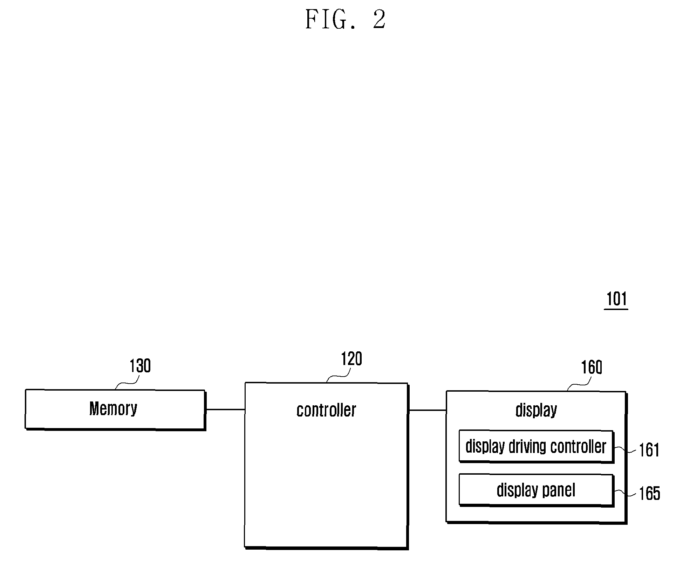

FIG. 2 is a block diagram of an electronic device according to various embodiments of the present disclosure.

Referring to FIG. 2, the electronic device according to an embodiment of the present disclosure may include a display 160, a memory 130, and a controller 120. The display 160 may include a display driving controller 161 and a display panel 165.

The display 160 may be formed by a liquid crystal display (LCD), organic light emitting diode (OLEDs), active matrix LEDs (AMOLEDs), and the like, and visually provide a still image and a dynamic image to a user. The dynamic "image" may comprise a sequence of a plurality of images. The display 160 according to an embodiment of the present disclosure may receive an image display request from the controller application processor (AP) 120 and display the corresponding image.

The display 160 may include the display panel 165 and the display driving controller 161 (for example, a display driver integrated circuit (IC)) for controlling an electrical signal to be transferred to the display panel. At this time, the display panel 165 may be based on an oxide thin film transistor (TFT) type. For reference, the oxide TFT type has a smaller display error such as a flicker phenomenon compared to another scheme even when the refresh frequency is reduced when a screen is displayed since the oxide TFT scheme generates a smaller leakage current. Accordingly, the electronic device according to an embodiment of the present disclosure may have an oxide TFT type display panel mounted thereto.

The display driving controller 161 may include a random access memory (RAM) for temporarily storing an image to be displayed according to an embodiment of the present disclosure. The RAM within the display 160 may be distinguished from a RAM included in the controller AP 120 and serve as a frame buffer.

Further, the display driving controller 161 may include a content analyzer for analyzing a type of an image to be displayed according to an embodiment of the present disclosure. The content analyzer may classify images to be displayed according to whether the image can be refreshed with a low frequency (a refresh is an operation of immediately performing re-projection before a projected image disappears, so as to prevent a flicker phenomenon of the image). For example, the content analyzer may divide images into an image, which has no problem by a flicker phenomenon (in which the same state screen is not steady and varies and the screen shakes) even when the controller 120 refreshes the image requested to be displayed with a low frequency (for example, 1 hz) according to a preset reference, and an image which has a problem when the image is driven with a low frequency. The content analyzer may determine this information directly, for example, based upon whether a still image or a dynamic image is being supplied for display in the display screen. A still image should require a lower refresh frequency than the present basic frequency of, for example 60Hz. The content analyzer may also determine an appropriate image refresh frequency depending upon a measured or estimated leakage current of the display screen. As explained in the introductory portion of the description, an oxide TFT device is expected to have a reduced leakage current relative to an a-si TFT display device or an LTPS display device so the oxide TFT device should be tolerant to a lower refresh rate without flicker than the a-si or PTPS displays. The content analyzer may perform an empirical test on an image or sequence of images to determine an acceptable refresh frequency based upon a detected flicker amount detected during the analysis. The image density may correspond to an amount of information content in the image such as an entropy of a still image or an amount of motion between successive images in a sequence or may correspond to pixel density in an image. Further, the content analyzer may classify a type of corresponding contents to be analyzed according to at least one reference of the number of frames projected per unit time and density of the image, and calculate a changed frequency corresponding to the type of the corresponding image. The density of the image varies depending on the frequency of the flicker phenomenon occurring in the low frequency implementation. For example, when the density of the image is low, the changed frequency may be set as a relatively low frequency (for example, 10 Hz from 1 to 60 Hz). According to various embodiments of the present disclosure, the content analyzer may be included in the controller 120.

The memory 130 may store various programs and data required for driving the electronic device. The memory 130 according to an embodiment of the present disclosure may store various types of image data which can be displayed. The image data may include not only pictures stored by a separate request from the user but also basically provided images such as a menu screen of the electronic device. In addition, the image data may refer to all types of images, which can be displayed, including text documents shown in electronic books and dictionaries, and the like.

The controller 120 may control general driving of the electronic device. In order to display a particular image, the controller 120 according to an embodiment of the present disclosure may transfer information on the image acquired from the memory 130 and initially set basic frequency information (in some example embodiments the basic frequency is 60 Hz) to the display 160. When the controller 120 receives changed refresh frequency information on the displayed image from the display 160 according to various embodiments of the present disclosure, the controller 120 may control the display 160 to refresh the corresponding image according to the changed frequency.

The controller 120 may include the content analyzer according to various embodiments of the present disclosure. The image to be displayed is refreshed with a low frequency, the content analyzer included in the controller 120 may classify the types of image according to whether a problem due to the flicker phenomenon occurs. The classification may be performed based on a pre-provided image classification table. According to the image classification, different driving frequencies may be allocated. For example, when the basic refresh frequency is 60 hz, one image may be determined to not have a problem when the refresh is performed with 1 hz but another image may be determined to have a problem when the refreshed is performed with a frequency equal to or lower than 30 hz based on a result of the image analysis by the content analyzer. As described above, the content analyzer may allocate the changed frequency not to generate the problem in each image. When the content analyzer exists within the controller 120, the controller 120 may transfer a request for refreshing the image with the changed frequency to the content analyzer together with an image display request to the display 160. Other detailed embodiments will be made with reference to the following description.

Hereinafter, various embodiments of the present disclosure will be described in detail with reference to the drawings.

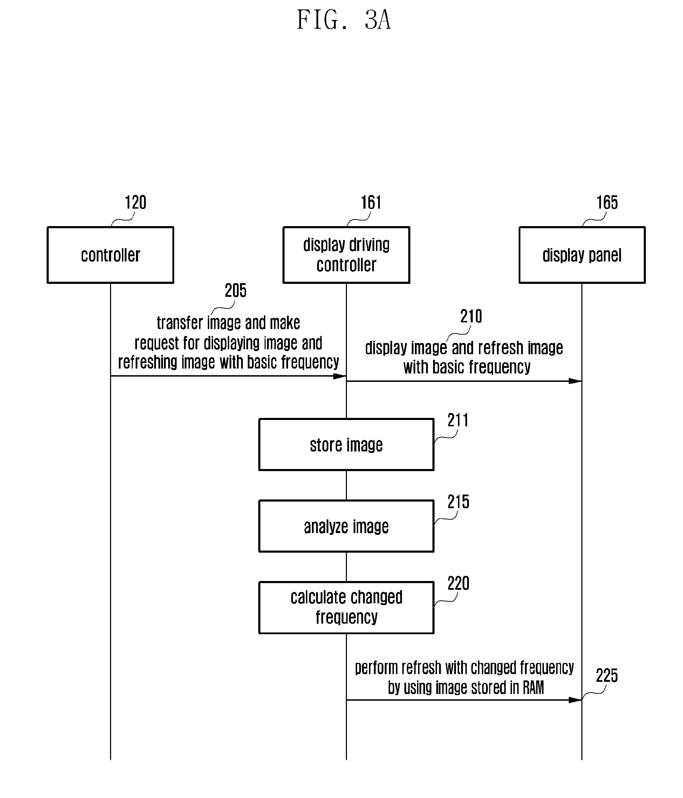

FIGS. 3A to 3D illustrate an operation for displaying a screen based on low frequency driving according to a first embodiment of the present disclosure.

Referring to FIG. 3A, the first embodiment relates to a case where the RAM and the content analyzer are included in the display driving controller 161 of the display 160. The display driving controller 161 and the display panel 165 illustrated in FIG. 3A correspond to components included in the display 160.

First, the controller 120 may transfer an image stored in the storage unit to the display driving controller 161 and transfer an image display request and a request for a refresh with a basic frequency in operation 205. The image may include dynamic image information and displayable data in various formats. The dynamic image may be excluded from a target which varies a refresh frequency according to various embodiments of the present disclosure. The basic frequency may be, for example, 60 hz, which means that the refreshing is performed 60 times per second.

The display driving controller 161 may display an image in the display panel 165 and make a control to refresh the image with the basic frequency (for example, 60 hz) in operation 210 after operation 205. Thereafter, the display driving controller 161 may perform operation 211 for temporarily storing the image received from the controller 120 in the RAM. The operation for storing the image in the RAM may be performed before operation 210 is performed or while operation 210 is performed. The display driving controller 161 may perform operation 215 for analyzing the type of image received from the controller. At this time, the displayed image may have no problem even though the image is refreshed with a significantly low frequency (for example, 1 hz) compared to the conventionally set refresh frequency, but may have a problem according to a flicker phenomenon if the image is refreshed with a significantly low frequency. Accordingly, the display driving controller 161 may perform an operation for classifying the type of image according to a preset reference in operation 215. The classification reference may be set based on the fact that the flickering phenomenon may occur with a higher probability in a dynamic image. Accordingly, the image may be classified according to, for example, the source thereof. More specifically, when a particular image corresponds to an image (for example, an image of Internet news, search portal, social networking service (SNS), and the like) received from a web server, the image is determined as the relative dynamic image and classified as a first group image. A text image of an electronic book may be determined as a relatively static image and classified as a second group image. The type of the classified image may be further varied.

The display driving controller 161 may calculate a changed frequency suitable for each image based on classified information according to a preset reference in operation 220 after the classification operation. At this time, the changed frequency has a value smaller than the basic frequency (for example, 60 hz) and a minimum value (for example, 1 hz) within a range in which the program due to the flicker phenomenon does not occur may be calculated as the changed frequency. Thereafter, the display driving controller 161 may control the display panel 165 to refresh the corresponding image with the changed frequency (for example, 1 hz) in operation 225. The refresh operation requires refresh frequency information and an image to be refreshed and, at this time, the display driving controller 161 includes the RAM (serving to temporarily store an image to be displayed). Accordingly, the display driving controller 161 may perform the refresh by using the image, which has been received by itself and stored in the RAM, without receiving the image and refresh request from the controller 120.

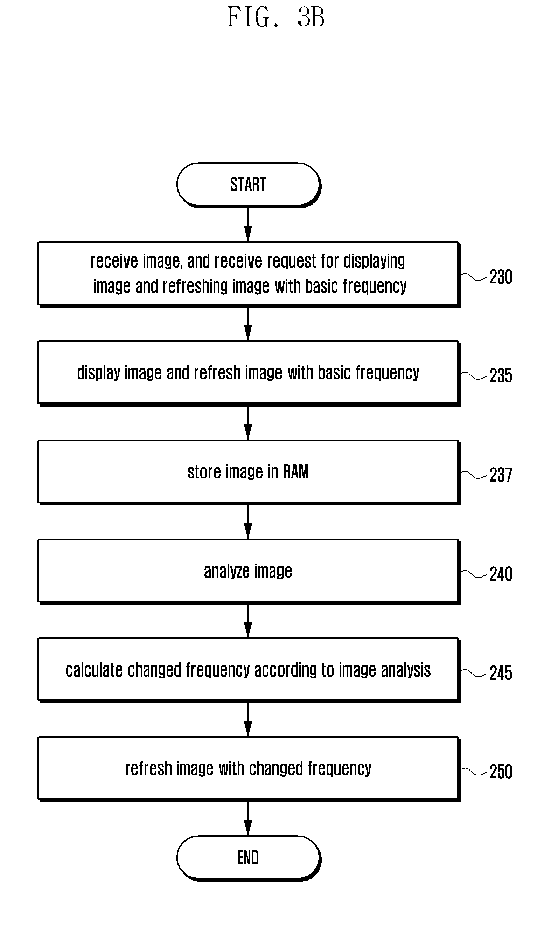

FIG. 3B is a flowchart illustrating an operation of the display driving controller 161 according to the first embodiment of the present disclosure. First, the display driving controller 161 may receive an image from the controller and receive a request for displaying the image and refreshing the image with the basic frequency in operation 230. Thereafter, the display driving controller 161 may display the requested image and refresh the image with the basic frequency in operation 235. Thereafter, the display driving controller 161 may temporarily store the received image in the RAM in operation 237. The display driving controller 161 may analyze a type of the image in operation 240. Thereafter, the display driving controller 161 may calculate a changed frequency according to the image analysis in operation 245. Thereafter, the display driving controller 161 may perform an operation of refreshing the image with the changed frequency while the image is displayed in operation 250.

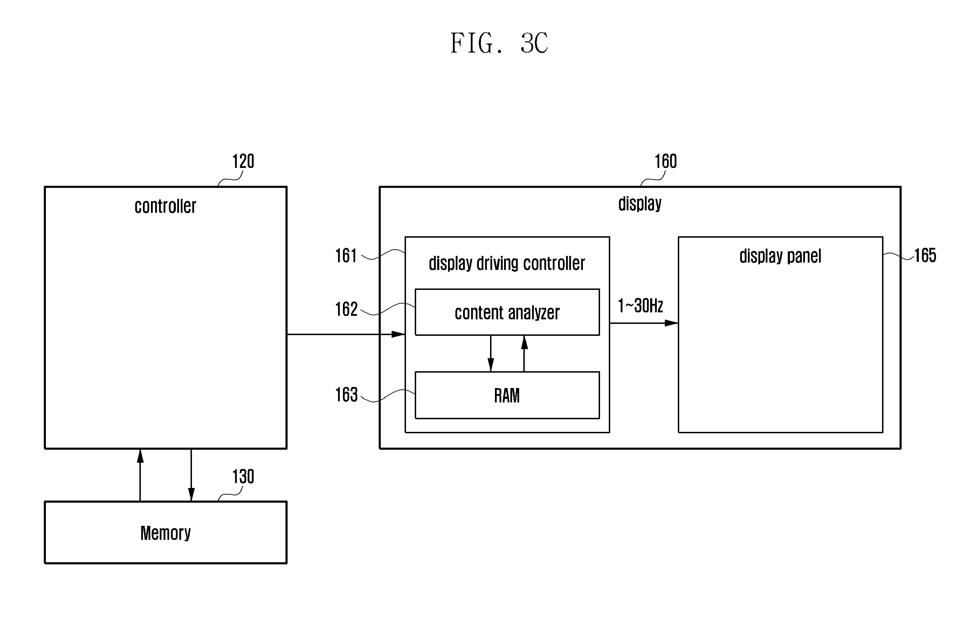

FIG. 3C illustrates a structure of the electronic device according to the first embodiment of the present disclosure.

The controller 120 may load an image to be displayed on the display 160 from the memory 130. The controller 120 may transfer an image display request to the display driving controller 161 of the display 160. Thereafter, the display driving controller 161 may make a control to display the image by transferring a signal related to the displaying of the corresponding image to the display panel 165 of the display 160. The display driving controller 161 may perform the operations of analyzing the image and calculating the changed frequency of the corresponding image performed by the content analyzer 162. When the operations of analyzing the image and calculating the changed frequency are completed, the display driving controller 161 may perform the refresh operation with the changed frequency. The display driving controller 161 may include the RAM 163 corresponding to a storage space for temporarily storing an image to be refreshed. Accordingly, when performing the refresh operation of the same image, the display driving controller 161 may use image data stored in the RAM 163 without receiving the image to be refreshed from the controller 120 or the memory 130. Meanwhile, if the image to be displayed is changed, the controller 120 may transfer a display request for new image data stored in the memory 130 to the display 160. Thereafter, a type of the new image is also analyzed and then a changed frequency value (for example, 1 hz) may be allocated to the image. Further, the display driving controller 161 may refresh the image, which is newly received and stored in the RAM 163, with the changed frequency (for example, 1 hz).

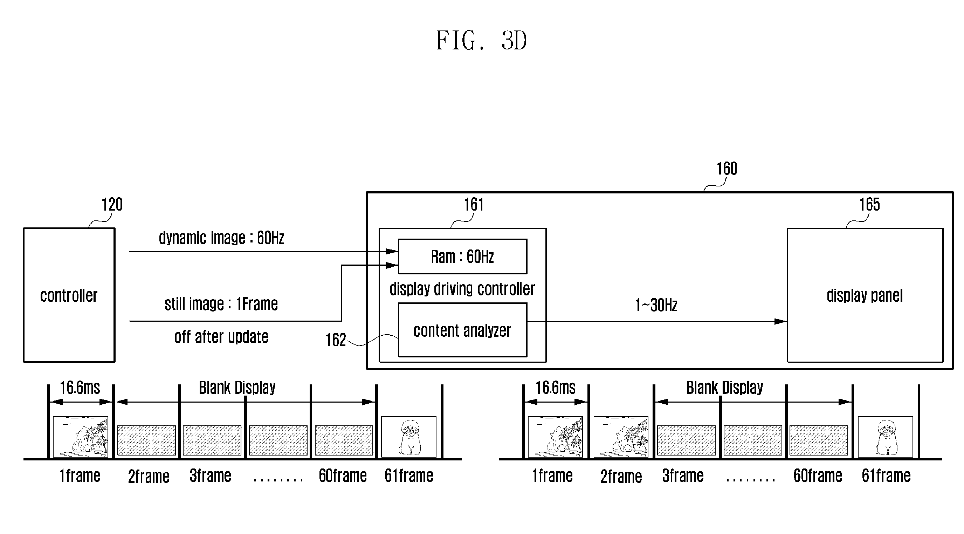

FIG. 3D illustrates in more detail a driving scheme when the RAM exists within the display driving controller 161.

First, the controller 120 may transmit a display request for dynamic image data and still image data to the display driving controller 161. When the data to be displayed corresponds to the dynamic image data (for example, a movie, a game, or the like), a frame period of the image data transferred to the display driving controller 161 may be, for example, 60 hz. When the data corresponds to the still image, only image data of one frame may be transmitted. Further, after receiving the image data, the display driving controller 161 may control the refresh frequency (for example, 60 hz), which is basically set, to be suitable for each image characteristic. Thereafter, the display driving controller 161 may refresh the image with the controlled frequency on the display panel 165. At this time, when transferred frames of the dynamic image are 60 frames per second, the basically set frequency is 60 hz, so that the refresh frequency does not become reduced. However, in a case of the still image, since only one image frame is requested to be displayed, the refresh frequency may be reduced to, for example, 1 to 30 hz.

At this time, the operation of controlling the refresh frequency performed by the display driving controller 161 may be an operation performed while the image is displayed. This is because there is a difference in a speed between the frequency control operation and the refresh operation. Accordingly, the refresh operation may be performed with the basic frequency before the frequency control operation is completed. As illustrated in FIG. 3D, before the changed frequency of each image is calculated, the image may be newly displayed every about 16.6 ms according to the basic frequency (60 hz).

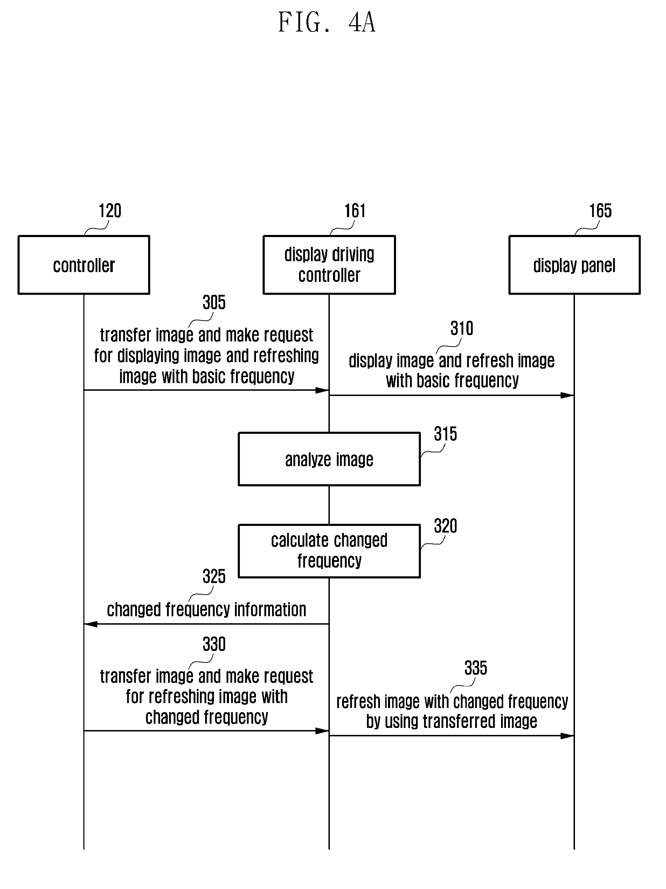

FIGS. 4A to 4C illustrate an operation for displaying a screen based on low frequency driving according to a second embodiment of the present disclosure.

According to the second embodiment of the present disclosure, the display driving controller 161 may include the content analyzer without including the RAM. In addition, the display driving controller 161 may include a plurality of controllers for controlling a signal transferred to the display panel 165 of other display unit.

Referring to FIG. 4A, the controller 120 may transfer an image to the display driving controller 161 and make a request for displaying the image and refreshing the image with the basic frequency in operation 305. Thereafter, the display driving controller 161 may display the received image on the display panel 165 of the display 160 and refresh the image with the basic frequency in operation 310. An operation for refreshing the image with the basic frequency may be performed before the changed frequency is calculated according to image analysis.

The display driving controller 161 may analyze the image requested to be displayed in operation 315. The display driving controller 161 may perform operation 320 of calculating the changed frequency of the image according to a result of the image analysis. The display driving controller 161 may perform operation 325 of transmitting changed frequency information calculated in operation 320 to the controller 120. According to the second embodiment of the present disclosure, since the RAM is not included in the display driving controller 161, an operation of transmitting the changed frequency information to the controller 120 may be required to refresh the image according to the changed frequency.

Thereafter, the controller 120 may make a request for the refresh operation of the image with the received changed frequency and transfer the image to be refreshed in operation 330. The display driving controller 161 may refresh the image with the changed frequency on the display panel 165 according to the received request in operation 335.

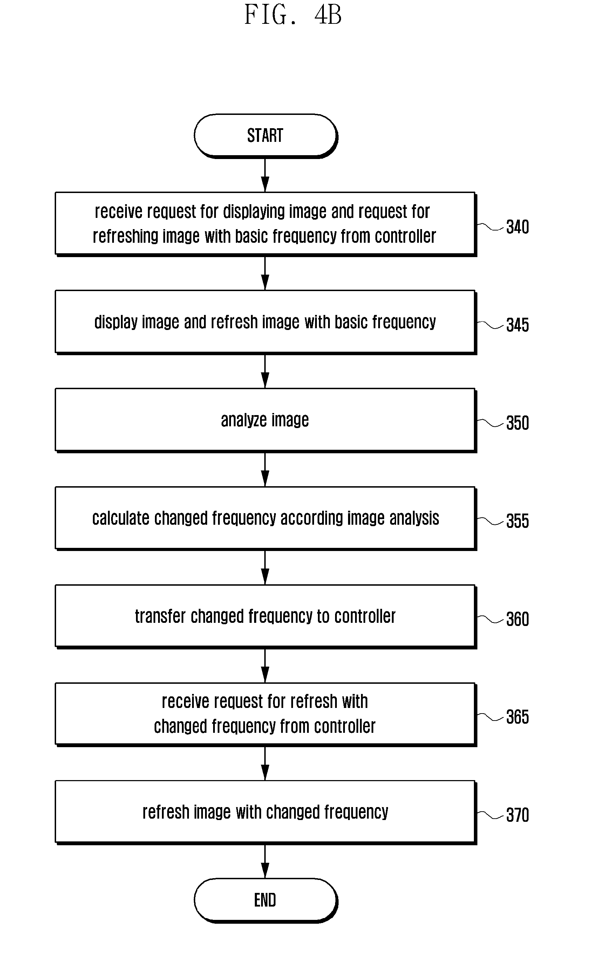

FIG. 4B is a flowchart illustrating an operation of the display driving controller 161 when the aforementioned refresh is performed.

Referring to FIG. 4B, first, the display driving controller 161 may receive an image from the controller 120 and receive an image display request and a request for a refresh with the basic frequency in operation 340. The display driving controller 161 may display the image according to the request and refresh the image with the basic frequency (for example, 60 hz) in operation 345. The display driving controller 161 may analyze a type of the image in operation 350. The display driving controller 161 may perform operation 355 of calculating the changed frequency of the image according to a result of the analysis. Since a process of determining the changed frequency has been described above, a description thereof will be omitted.

Thereafter, the display driving controller 161 may transfer changed frequency information to the controller 120 in operation 360. After operation 360, the controller 120 may transmit the refresh request based on the changed frequency received from the display driving controller 161 to the display driving controller 161 again. Accordingly, the display driving controller 161 may receive the refresh request for the image with the changed frequency (for example, 1 to 30 hz) from the controller 120 in operation 365. In other words, in operation 365, the display driving controller 161 may receive the image from the controller 120 and receive the refresh request for the image with the changed frequency. Accordingly, the display driving controller 161 may make a control to refresh the image with the determined frequency (for example, 1 to 30 hz) in operation 370.

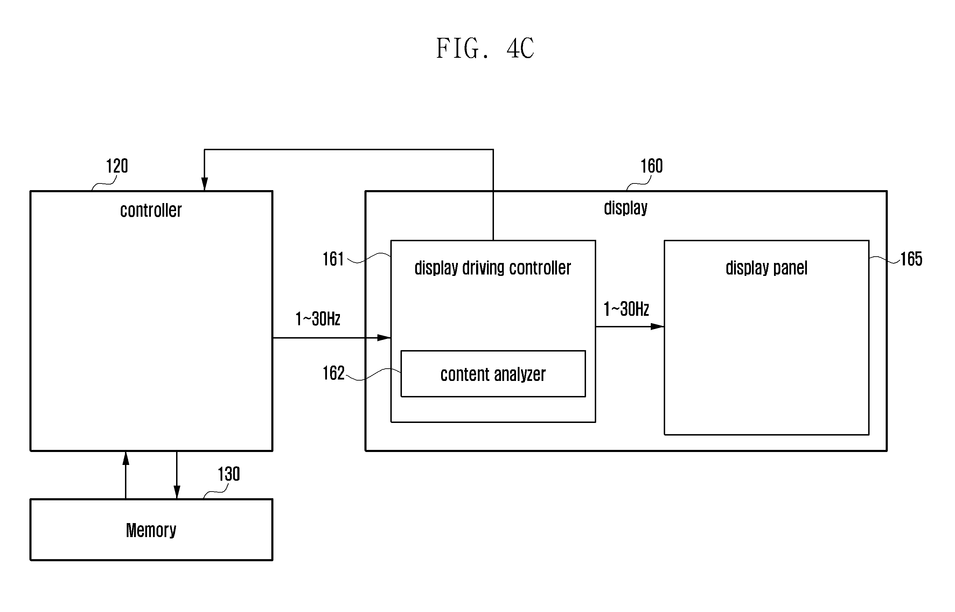

FIG. 4C illustrates a structure of the electronic device according to the second embodiment of the present disclosure.

Referring to FIG. 4C, the display 160 may include the display driving controller 161 for receiving a display signal from the controller 120 and controlling a display status of the display panel 165, and the display panel 165 for displaying an image by the display driving controller 161. Further, according to the second embodiment of the present disclosure, the display driving controller 161 may include the content analyzer 162 but not include the RAM. The electronic device according to the second embodiment of the present disclosure may include the controller 120 and the storage unit 130 as well as the display 160.

The display driving controller 161 may determine a proper refresh frequency of the image, which is requested to be displayed, determined through the content analyzer 162. Since the determined frequency has been described above, a detailed description thereof will be omitted herein and hereinafter. Thereafter, the display driving controller 161 may transfer determined frequency information to the controller 120. For example, the basically set refresh frequency is 60 hz, and the refresh frequency determined through the content analyzer 162 may be changed to 1 hz. In this case, the controller 120 may transmit the image to the display driving controller 161 with the changed frequency of 1 hz. Accordingly, the display driving controller 161 may refresh and display the corresponding image on the display panel 165 with the changed frequency of 1 hz.

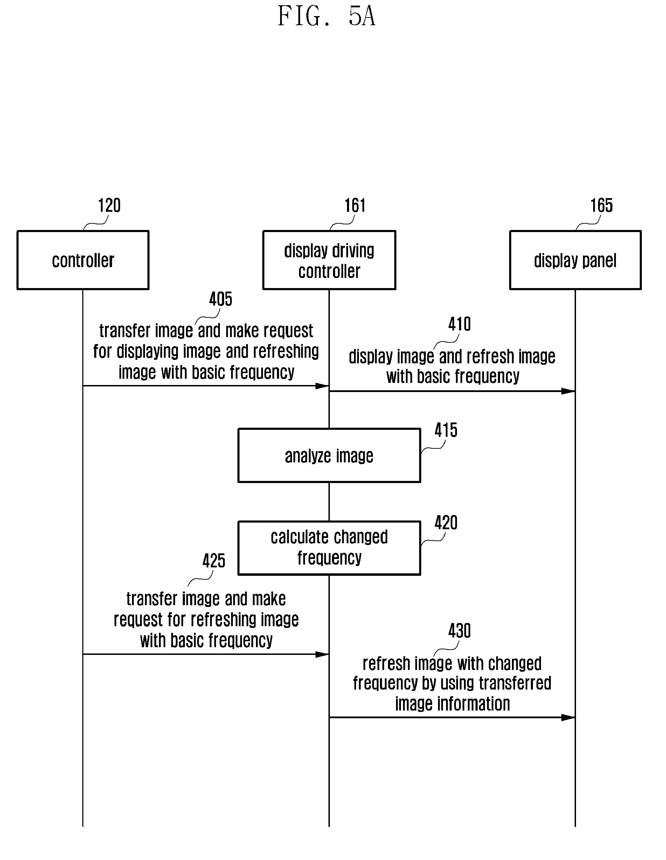

FIGS. 5A to 5D illustrate an operation for displaying a screen based on low frequency driving according to a third embodiment of the present disclosure.

Referring to FIG. 5A, the controller 120 may transfer a request for displaying the image and refreshing the image with the basic frequency to the display driving controller 161 in operation 405. The display driving controller 161 may make a control to display the image requested to be displayed on the display panel 165 of the display 160 and refresh the image with the basic frequency in operation 410. The display driving controller 161 may perform operation 415 of analyzing the image requested to be displayed and then determine a refresh frequency suitable for the image in operation 420.

Since the RAM does not exist within the display driving controller 161 of the display 160 in the third embodiment of the present disclosure, the controller 120 may transfer a continuous refresh request based on the basically set frequency for the refresh to the display 160. Accordingly, the controller 120 may make a request for the image refresh with the basic frequency to the display driving controller 161 in operation 425. The display driving controller 161 having received the request may perform operation 430 of refreshing the image with the determined frequency on the display panel 165.

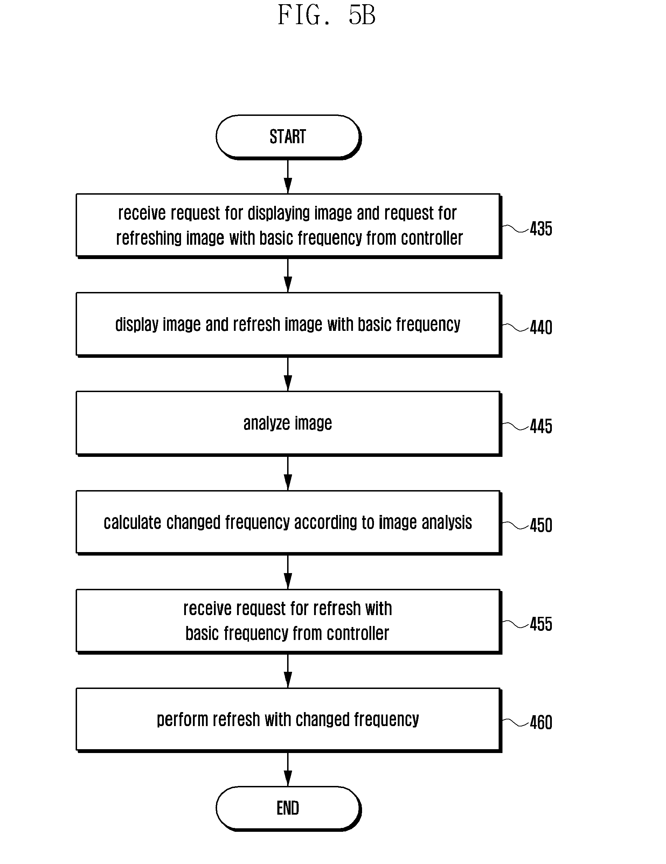

FIG. 5B is a flowchart illustrating an image display operation according to low frequency driving by the display driving controller 161.

Referring to FIG. 5B, the display driving controller 161 may receive a request for displaying the image and refreshing the image with the basic frequency from the controller 120 in operation 435. Accordingly, the display driving controller 161 may display the image according to the request and refresh the image with the basic frequency in operation 440. The display driving controller 161 may analyze a type of the displayed image in operation 445, and determine a proper refresh frequency according to the analyzed image type in operation 450. The display driving controller 161 may receive the request for the refresh with the basic frequency from the controller 120 in operation 455. At this time, the changed frequency information is not transferred to the controller 120, so that the display driving controller 161 may continuously receive the request for the refresh with the basically set frequency from the controller 120 (for example, 60 times per second in a case of 60 hz). However, since the display driving controller 161 has already determined the proper refresh frequency according to the image to be displayed, the display driving controller 161 refreshes the image with the frequency determined in operation 450 in operation 460 even though the refresh request is frequently received from the controller 120.

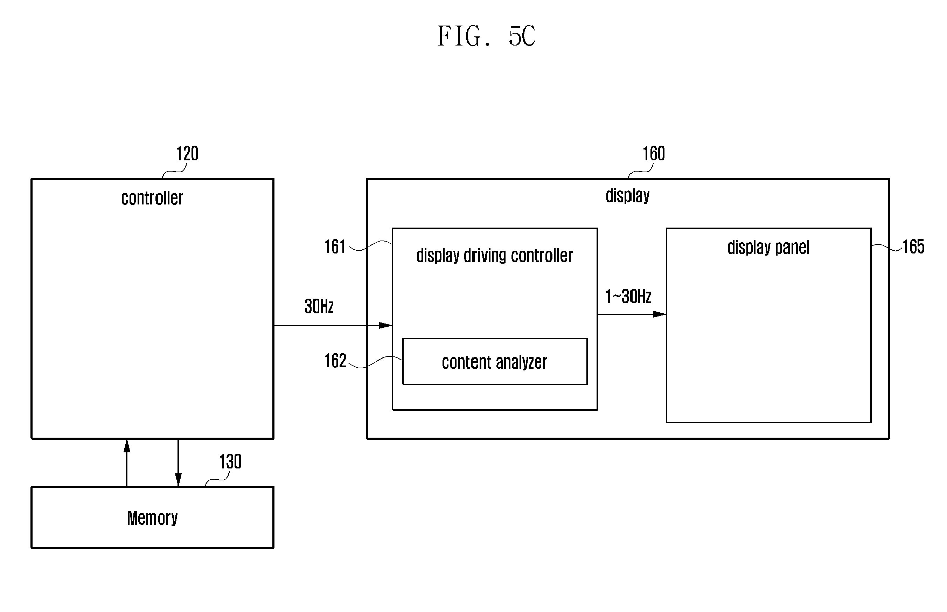

FIG. 5C illustrates a configuration of the electronic device according to the third embodiment of the present disclosure.

Referring to FIG. 5C, in the configuration of the electronic device according to the third embodiment of the present disclosure, the display driving controller 161 may include the content analyzer 162 like in the second embodiment of the present disclosure. However, the third embodiment of the present disclosure is different from the second embodiment of the present disclosure in that the content analyzer 162 analyzes the image and determines the proper refresh frequency according to the image analysis but does not transfer the determined frequency information to the controller 120 in the third embodiment of the present disclosure. Further, since the display driving controller 161 does not include the RAM, the display 160 cannot perform the operation of refreshing the image with the determined frequency by itself. Accordingly, the controller 120 may make a request for refreshing the image with the basic frequency to the display 160. At this time, a basic frequency value allocated to the image may be set separately from the refresh frequency of the dynamic image. The basic frequency allocated to the image may be set as a lowest frequency (for example, 30 hz) which does not generate the problem due to the flicker phenomenon. As described above, when the controller 120 makes a request for the refresh with the basic frequency (for example, 30 hz) to the display driving controller 161 of the display 160, the display driving controller 161 may perform the refresh with the frequency (for example, 1 hz) determined by the content analyzer 162 on the display panel 165.

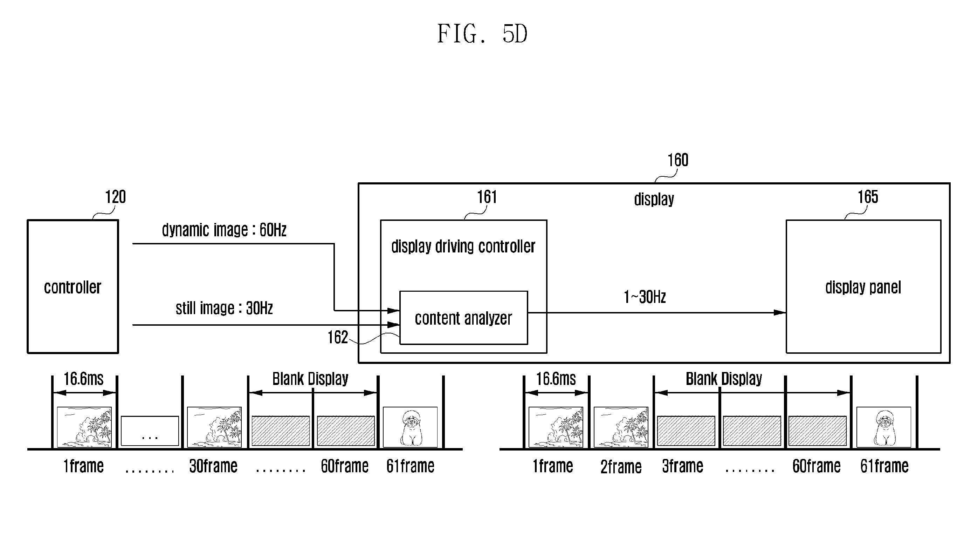

Referring to FIG. 5D, the controller 120 may make a request for displaying and refreshing dynamic image data or still image data to be displayed to the display driving controller 161 of the display 160. At this time, when it is assumed that the basic refresh frequency is 60 hz and the dynamic image is requested to display, for example, 60 frames per second, the dynamic image may be excluded from a target to change the refresh. In contrast, since the display image includes one frame, the basic frequency of the still image may be set as a predetermined value smaller than that of the dynamic image (for example, 30 hz). According to the basic frequency, in order to display the image, the controller 120 may transfer a request for displaying one frame of the image to the display driving controller 161 of the display unit 160 30 times per second (30 hz). According to the reception of the request, the display driving controller 161 may display the image of the received frequency 30 hz on the display panel 165. However, when the image requested to be displayed is analyzed and the changed frequency is calculated, the display driving controller 161 may change the refresh frequency of the image into the determined frequency.

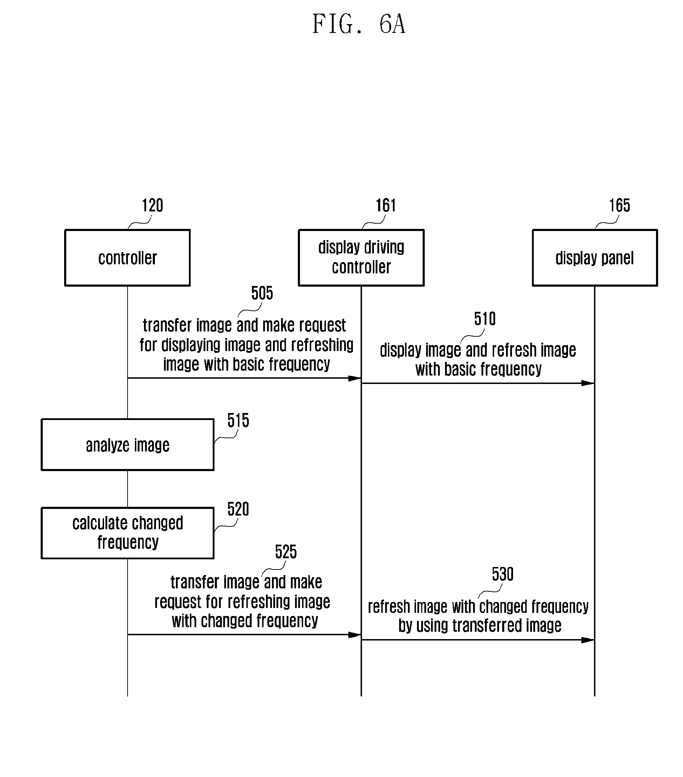

FIGS. 6A to 6C illustrate an operation for displaying a screen based on low frequency driving according to a fourth embodiment of the present disclosure.

According to the fourth embodiment of the present disclosure, the content analyzer 162 may be included in the controller 120. Referring to FIG. 6A, the controller 120 may make a request for displaying the image and refreshing the image with the basic frequency to the display driving controller 161 in operation 505. Accordingly, the display driving controller 161 may display the image in response to the request and refresh the image with the basic frequency in operation 510. However, operations 505 and 510 may be omitted in some cases.

As described above, since the controller 120 includes the content analyzer 162, the controller 120 may perform operation 515 of analyzing a type of the image to be displayed and operation 520 of determining a proper refresh frequency of the image based on operation 515. Thereafter, the controller 120 may perform operation 525 of making a request for displaying and refreshing the image with the determined frequency to the display driving controller 161. Accordingly, the display driving controller 161 may perform operation 530 of controlling the display panel 165 to refresh the image with the determined frequency according to the request.

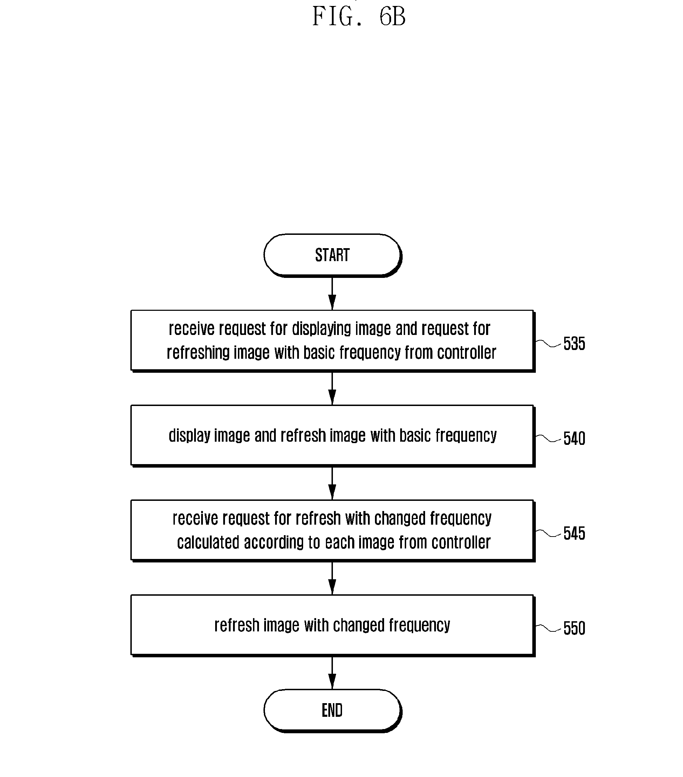

FIG. 6B is a flowchart illustrating an operation of the display driving controller 161 according to the fourth embodiment of the present disclosure. Referring to FIG. 6B, the display driving controller 161 may receive a request for displaying the image and refreshing the image with the basic frequency in operation 535. Thereafter, the display driving controller 161 may perform an operation of displaying the image according to the request and refreshing the image with the basic frequency in operation 540. According to the fourth embodiment of the present disclosure, the controller 120 may analyze the image to be displayed and determine the proper refresh frequency. Accordingly, the display driving controller 161 may receive the request for refreshing the image with the determined frequency (for example, 1 hz) from the controller 120 in operation 545. Further, when the display driving controller 161 receives the request for the refresh with the changed frequency, the display driving controller 161 may perform the refresh with the changed frequency in operation 550.

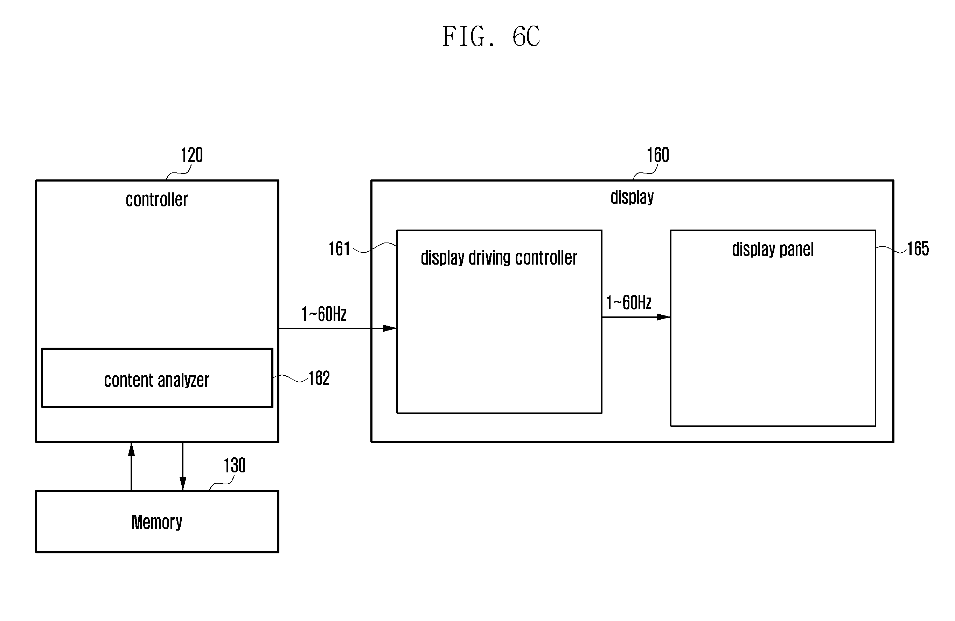

The configuration of the electronic device according to the fourth embodiment is as illustrated in FIG. 6C. Referring to FIG. 6C, the controller 120 may include the content analyzer 162, and the content analyzer 162 may analyze the image stored in the memory 130. The content analyzer 162 may determine a proper refresh frequency of the image based on a result of the image analysis. Accordingly, the controller 120 may make a request for refreshing the image with the determined frequency to the display driving controller 161 of the display 160. The display driving controller 161 may refresh the image with the determined frequency on the display panel 165 according to the request received from the controller 120.

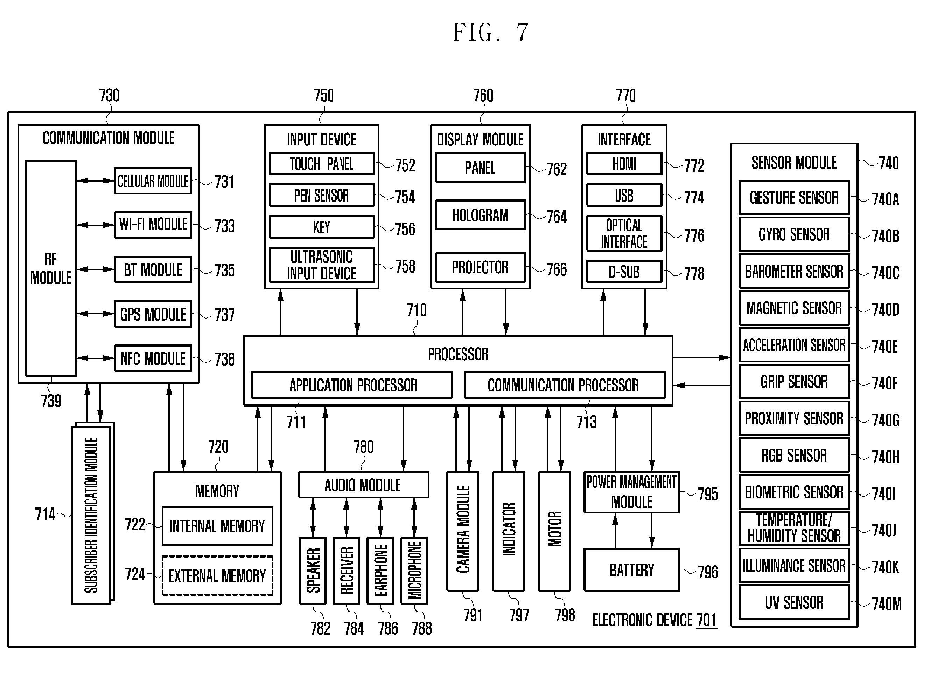

FIG. 7 is a block diagram illustrating a configuration of an electronic device according to an embodiment of the present disclosure.

The electronic device 701 may be, for example, the electronic device 101 illustrated in FIG. 1.

Referring to FIG. 7, the electronic device 701 may include one or more processors 710, a subscriber identification module (SIM) card 714, a memory 720, a communication module 730, a sensor module 740, a user input module 750, a display module 760, an interface 770, an audio module 780, a camera module 791, a power management module 795, a battery 796, an indicator 797, a motor 798 and any other similar and/or suitable components.

The processor 710 (e.g., the controller 120) may include one or more APs 711, or one or more communication processors (CPs) 713. The processor 710 may be, for example, the controller 120 illustrated in FIG. 1. The AP 711 and the CP 713 are illustrated as being included in the processor 710 in FIG. 7, but may be included in different IC packages, respectively. According to an embodiment of the present disclosure, the AP 711 and the CP 713 may be included in one IC package.

The AP 711 may execute an operating system (OS) or an application program, and thereby may control multiple hardware or software elements connected to the AP 711 and may perform processing of and arithmetic operations on various data including multimedia data. The AP 711 may be implemented by, for example, a system on chip (SoC). According to an embodiment of the present disclosure, the processor 710 may further include a graphical processing unit (GPU) (not illustrated).

The CP 713 may manage a data line and may convert a communication protocol in the case of communication between the electronic device (e.g., the electronic device 101) including the electronic device 701 and different electronic devices connected to the electronic device through the network. The CP 713 may be implemented by, for example, a SoC. According to an embodiment of the present disclosure, the CP 713 may perform at least some of multimedia control functions. The CP 713, for example, may distinguish and authenticate a terminal in a communication network by using a subscriber identification module (e.g., the SIM card 714). Also, the CP 713 may provide the user with services, such as a voice telephony call, a video telephony call, a text message, packet data, and the like.

Further, the CP 713 may control the transmission and reception of data by the communication module 730. In FIG. 7, the elements such as the CP 713, the power management module 795, the memory 720, and the like are illustrated as elements separate from the AP 711. However, according to an embodiment of the present disclosure, the AP 711 may include at least some (e.g., the CP 713) of the above-described elements.

According to an embodiment of the present disclosure, the AP 711 or the CP 713 may load, to a volatile memory, a command or data received from at least one of a non-volatile memory and other elements connected to each of the AP 711 and the CP 713, and may process the loaded command or data. Also, the AP 711 or the CP 713 may store, in a non-volatile memory, data received from or generated by at least one of the other elements.

The SIM card 714 may be a card implementing a subscriber identification module, and may be inserted into a slot formed in a particular portion of the electronic device 101. The SIM card 714 may include unique identification information (e.g., ICcard identifier (ICCID)) or subscriber information (e.g., international mobile subscriber identity (IMSI)).

The memory 720 may include an internal memory 722 and an external memory 724. The memory 720 may be, for example, the memory 130 illustrated in FIG. 1. The internal memory 722 may include, for example, at least one of a volatile memory (e.g., a dynamic RAM (DRAM), a static RAM (SRAM), a synchronous DRAM (SDRAM), etc.), and a non-volatile memory (e.g., a one time programmable read-only memory (OTPROM), a PROM, an erasable and PROM (EPROM), an electrically EPROM (EEPROM), a mask ROM, a flash ROM, a Not AND (NAND) flash memory, a Not OR (NOR) flash memory, etc.). According to an embodiment of the present disclosure, the internal memory 722 may be in the form of a solid state drive (SSD). The external memory 724 may further include a flash drive, for example, a compact flash (CF), a secure digital (SD), a micro-SD (Micro-SD), a mini-SD (Mini-SD), an extreme digital (xD), a memory stick, or the like.

The communication module 730 may include a cellular module 731 or a radio frequency (RF) module 739. The communication module 730 may be, for example, the communication interface 150 illustrated in FIG. 1. The wireless communication module 731 may include, for example, a Wi-Fi module 733, a BT module 735, a GPS module 737, or a NFC module 738. For example, the cellular module 731 may provide a wireless communication function by using a radio frequency. Additionally or alternatively, the cellular module 731 may include a network interface (e.g., a LAN card), a modulator/demodulator (modem), or the like for connecting the electronic device 701 to a network (e.g., the Internet, a LAN, a WAN, a telecommunication network, a cellular network, a satellite network, a POTS, or the like).

The RF module 739 may be used for transmission and reception of data, for example, transmission and reception of RF signals or called electronic signals. Although not illustrated, the RF module 739 may include, for example, a transceiver, a power amplifier module (PAM), a frequency filter, a low noise amplifier (LNA), or the like. Also, the RF module 739 may further include a component for transmitting and receiving electromagnetic waves in a free space in a wireless communication, for example, a conductor, a conductive wire, or the like.

The sensor module 740 may include, for example, at least one of a gesture sensor 740A, a gyro sensor 740B, a barometer sensor 740C, a magnetic sensor 740D, an acceleration sensor 740E, a grip sensor 740F, a proximity sensor 740G, a red, green, and blue (RGB) sensor 740H, a biometric sensor 740I, a temperature/humidity sensor 740J, an illuminance sensor 740K, and a ultra violet (UV) sensor 740M. The sensor module 740 may measure a physical quantity or may sense an operating state of the electronic device 101, and may convert the measured or sensed information to an electrical signal. Additionally/alternatively, the sensor module 740 may include, for example, an e-nose sensor (not illustrated), an electromyography (EMG) sensor (not illustrated), an electroencephalogram (EEG) sensor (not illustrated), an electrocardiogram (ECG) sensor (not illustrated), a fingerprint sensor (not illustrated), and the like. The sensor module 740 may further include a control circuit (not illustrated) for controlling one or more sensors included therein.

The user input module 750 may include a touch panel 752, a pen sensor 754 (e.g., a digital pen sensor), keys 756, and an ultrasonic input unit 758. The user input module 750 may be, for example, the input/output interface 140 illustrated in FIG. 1. The touch panel 752 may recognize a touch input in at least one of, for example, a capacitive scheme, a resistive scheme, an infrared (IR) scheme, and an acoustic wave scheme. Also, the touch panel 752 may further include a controller (not illustrated). In the capacitive type, the touch panel 752 is capable of recognizing proximity as well as a direct touch. The touch panel 752 may further include a tactile layer (not illustrated). In this event, the touch panel 752 may provide a tactile response to the user.

The pen sensor 754 (e.g., a digital pen sensor), for example, may be implemented by using a method identical or similar to a method of receiving a touch input from the user, or by using a separate sheet for recognition. For example, a key pad or a touch key may be used as the keys 756. The ultrasonic input unit 758 enables the terminal to sense a sound wave by using a microphone (e.g., a microphone 788) of the terminal through a pen generating an ultrasonic signal, and to identify data. The ultrasonic input unit 758 is capable of wireless recognition. According to an embodiment of the present disclosure, the electronic device 701 may receive a user input from an external device (e.g., a network, a computer, or a server), which is connected to the communication module 730, through the communication module 730.

The display module 760 may include at least one of a panel 762 a hologram 764, and a projector 766. The display module 760 may be, for example, the display 160 illustrated in FIG. 1. The panel 762 may be, for example, a LCD and an AM-OLED display, and the like. The panel 762 may be implemented so as to be, for example, flexible, transparent, or wearable. The panel 762 may include the touch panel 752 and one module. The hologram 764 may display a three-dimensional image in the air by using interference of light. According to an embodiment of the present disclosure, the display module 760 may further include a control circuit for controlling the panel 762 or the hologram 764.

The interface 770 may include, for example, a high-definition multimedia interface (HDMI) 772, a universal serial bus (USB) 774, an optical interface 776, and a d-subminiature (D-sub) 778. Additionally or alternatively, the interface 770 may include, for example, SD/multi-media card (MMC) (not illustrated) or IR data association (IrDA) (not illustrated).

The audio module 780 may bidirectionally convert between a voice and an electrical signal. The audio module 780 may convert voice information, which is input to or output from the audio module 780, through, for example, a speaker 782, a receiver 784, an earphone 786, the microphone 788 or the like.

The camera module 791 may capture an image and a moving image. According to an embodiment of the present disclosure, the camera module 791 may include one or more image sensors (e.g., a front lens or a back lens), an image signal processor (ISP) (not illustrated), and a flash LED (not illustrated).

The power management module 795 may manage power of the electronic device 701. Although not illustrated, the power management module 795 may include, for example, a power management IC (PMIC), a charger IC, or a battery fuel gauge.

The PMIC may be mounted to, for example, an IC or a SoC semiconductor. Charging methods may be classified into a wired charging method and a wireless charging method. The charger IC may charge a battery, and may prevent an overvoltage or an overcurrent from a charger to the battery. According to an embodiment of the present disclosure, the charger IC may include a charger IC for at least one of the wired charging method and the wireless charging method. Examples of the wireless charging method may include a magnetic resonance method, a magnetic induction method, an electromagnetic method, and the like. Additional circuits (e.g., a coil loop, a resonance circuit, a rectifier, etc.) for wireless charging may be added in order to perform the wireless charging.

The battery fuel gauge may measure, for example, a residual quantity of the battery 796, or a voltage, a current or a temperature during the charging. The battery 796 may supply power by generating electricity, and may be, for example, a rechargeable battery.

The indicator 797 may indicate particular states of the electronic device 701 or a part (e.g., the AP 711) of the electronic device 701, for example, a booting state, a message state, a charging state and the like. The motor 798 may convert an electrical signal into a mechanical vibration. The processor 710 may control the sensor module 740.

Although not illustrated, the electronic device 701 may include a processing unit (e.g., a GPU) for supporting a module TV. The processing unit for supporting a module TV may process media data according to standards such as, for example, digital multimedia broadcasting (DMB), digital video broadcasting (DVB), media flow, and the like. Each of the above-described elements of the electronic device 701 according to an embodiment of the present disclosure may include one or more components, and the name of the relevant element may change depending on the type of electronic device. The electronic device 701 according to an embodiment of the present disclosure may include at least one of the above-described elements. Some of the above-described elements may be omitted from the electronic device 701, or the electronic device 701 may further include additional elements. Also, some of the elements of the electronic device 701 according to an embodiment of the present disclosure may be combined into one entity, which may perform functions identical to those of the relevant elements before the combination.

The term "module" used in the present disclosure may refer to, for example, a unit including one or more combinations of hardware, software, and firmware. The "module" may be interchangeable with a term, such as "unit," "logic," "logical block," "component," "circuit," or the like. The "module" may be a minimum unit of a component formed as one body or a part thereof. The "module" may be a minimum unit for performing one or more functions or a part thereof. The "module" may be implemented mechanically or electronically. For example, the "module" according to an embodiment of the present disclosure may include at least one of an application-specific IC (ASIC) chip, a field-programmable gate array (FPGA), and a programmable-logic device for performing certain operations which have been known or are to be developed in the future. The "module" may comprise one or more hardware processor(s) although it the functionality of the module may be implemented on a virtual machine.

Each of the component elements described in this document may consist of one or more components, and the names of the corresponding component elements may vary depending on the type of electronic device. According to various embodiments of the present disclosure, the electronic device may include at least one of the aforementioned component elements. Some component elements may be omitted or other additional component elements may be further included in the electronic device. Also, some of the component elements of the electronic device according to various embodiments of the present disclosure may be combined into one entity, which may perform functions identical to those of the component elements before the combination.

It will be appreciated that embodiments of the present invention can be realized in the form of hardware, software or a combination of hardware and software. Any such software may be stored in the form of volatile or non-volatile storage, for example a storage device like a ROM, whether erasable or rewritable or not, or in the form of memory, for example RAM, memory chips, device or integrated circuits or on an optically or magnetically readable medium, for example a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

Throughout the description and claims of this specification, the words "comprise" and "contain" and variations of the words, for example "comprising" and "comprises", means "including but not limited to", and is not intended to (and does not) exclude other components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. An electronic device comprising:
a storage unit (130) configured to store an image;
a display unit (160) configured to display the image and to perform a refresh; and
a controller (120) configured to control the display unit to refresh the image with a preset basic frequency,
wherein the display unit comprises:
a display panel (165); and
a display driving controller (161) configured to analyze the image and, when a frequency change is required based on a result of the analysis, to control the display panel to refresh the image with a changed frequency corresponding to the image.

2. The electronic device of claim 1, wherein the display panel is based on an oxide thin film transistor (TFT) type.

3. The electronic device of claim 1 or claim 2, wherein the display driving controller is configured to calculate the changed frequency of the image.

4. The electronic device of claim 3, wherein the display driving controller is configured to calculate a value smaller than a value of the basic frequency as the changed frequency.

5. The electronic device of claim 3, wherein the display driving controller is configured to calculate the image based on at least one of: a number of frames projected per unit time and an image density.

6. The electronic device of any one of claims 1 to 5, wherein the display driving controller further comprises a random access memory (RAM) configured to temporarily store the image.

7. The electronic device of claim 6, wherein the display driving controller is configured to load an image from the RAM and to control the display panel to refresh the image with the changed frequency.

8. A method of displaying a screen by a display unit in an electronic device including the display unit and a controller configured to control the display unit, the method comprising:
receiving (230) an image from the controller;
refreshing (235) the image with a preset basic frequency;
analyzing (2400 the image according to a preset reference; and
when a frequency change is required based on a result of the analysis, refreshing (250) the image with a changed frequency corresponding to the image.

9. The method of claim 8, further comprising calculating the changed frequency of the image according to the image analysis.

10. The method of claim 8 or claim 9, wherein the changed frequency is a value smaller than a value of the basic frequency.

11. The method of any one of claims 8to 10, wherein the analyzing of the image according to the preset reference comprises analyzing the image according to a reference including at least one of a number of frames projected per unit time and an image density.

12. The method of any one of claims 8 to 11, wherein, when the display unit has a random access memory (RAM), the refreshing of the image with the changed frequency comprises:
storing an image received from the controller in the RAM; and
loading the image from the RAM and refreshing the image with the changed frequency.

13. A computer program comprising program instructions that upon execution by a processor cause the processor to implement the method of any one of claims 8 to 12.
